# FASCICULE DE BREVET EUROPEEN

(11) **EP 2 831 134 B1**
(45) Date de publication et mention de la délivrance du brevet: **27.04.2016**
(21) Numéro de dépôt: 13715387.0
(22) Date de dépôt: 27.03.2013
(51) Int. Cl.: C08G 18/75, C09D 175/06, C08G 18/08, C08G 63/48, C09D 175/14, C08G 18/42, C08G 18/68

(54) **DISPERSIONS AQUEUSES DE RÉSINES POLYURÉTHANE A BASE DE COLOPHANE**
WÄSSRIGE DISPERSIONEN VON POLYURETHANHARZEN AUF DER BASIS VON KOLOPHONIUM
AQUEOUS DISPERSIONS OF POLYURETHANE RESINS BASED ON ROSIN

(30) Priorité: 30.03.2012 FR 1252898
(43) Date de publication de la demande: 04.02.2015
(73) Titulaire: Arkema France, 92700 Colombes (FR)
(72) Inventeur: HERVE, Grégoire, 56000 Vannes (FR); COGORDAN, Frank, F-75019 Paris (FR)
(74) Mandataire: Killis, Andréas
(86) Numéro de dépôt international: PCT/FR2013/050665
(87) Numéro de publication internationale: WO 2013/144510

(56) Documents cités:
- EP-A1- 0 017 199
- FR-A1- 2 003 473
- FR-A1- 2 330 744

## Description

L'invention concerne une résine de polyuréthane à base de colophane, obtenue à partir d'un polyester gras hydroxylé modifié à la colophane, polyester d'origine biosourcée et concerne également les dispersions aqueuses de ces résines et leurs utilisations dans les revêtements aqueux.

Les alkydes en milieu solvant organique, autrement appelées solvantées, sont des résines bien connues de longue date par l'homme du métier, utilisées, en règle générale, dans les revêtements et les formulations de peintures décoratives et industrielles. Pour répondre à des questions de confort d'utilisation, d'odeur et de toxicité, des émulsions d'alkydes spécifiques ont été développées et mises sur le marché depuis une vingtaine d'années environ, avec des niveaux de performance intéressants en termes de brillant, de séchage, d'aspect/couleur, de stabilité, d'odeur. Une solution technique de mise en oeuvre conventionnelle, employée pour former des émulsions d'alkydes stables dans le temps, consiste à utiliser une combinaison d'un tensioactif non ionique avec un tensioactif anionique comme décrit dans WO 2008/076360.

Malgré ces améliorations, certains paramètres et performances restent encore à améliorer tels que la résistance au jaunissement, la résistance au blocking, la dureté et le séchage.

Dans le domaine des revêtements, en particulier pour applications décoratives, il existe des dispersions de résines alkydes uréthanisées commerciales, comme par exemple la WorleeSol^{®} E 150 W fournie par Worlee, commerciales, comme par exemple la WorleeSol^{®} E 150 W fournie par Worlee, lesquelles sont connues pour un développement rapide de dureté et l'apport d'un gain en terme de séchage initial dans les peintures composées de dispersions d'alkydes, mélangées ou non à d'autres dispersions aqueuses telles que les latex. Néanmoins, ces dispersions uréthanisées connaissent des problèmes de développement de jaunissement dans le temps plus importants par rapport aux dispersions alkydes et acryliques. De plus, les niveaux de brillant sont réduits par comparaison aux dispersions d'alkydes ou (pire) acryliques, c'est pourquoi aujourd'hui les formulations de peintures brillantes (haut de gamme) contiennent une faible proportion de dispersion uréthanisée. En parallèle, il y a un besoin d'augmenter encore le niveau de séchage physique, en particulier le séchage initial (séchage pendant les premières heures après application), et si possible, sans besoin d'agent siccatif toxique tel que les dérivés du cobalt ou plomb.

D'autre part, les contraintes environnementales et les enjeux liés au développement durable font croître le besoin en résines et en dispersions aqueuses liées, ayant un taux réduit de COV (VOC en anglais) produites avec des matières premières d'origine renouvelable (ou non fossile).

La résine de l'invention permet la préparation de dispersions aqueuses de polyuréthanes à base de polyesters gras qui remplissent ces besoins ou remédient aux inconvénients des dispersions connues citées.

La solution de l'invention est d'abord une solution amicale pour l'homme et pour son environnement du fait de l'absence à la fois de solvants organiques avec faible taux de COV (composés organiques volatils) dans la dispersion aqueuse et l'absence d'agents siccativants, appelés aussi siccatifs, au séchage mais aussi par le choix des matières premières essentielles du polyester gras servant de base à la résine polyuréthane, dans la mesure où un fort taux de ces matières premières est d'origine renouvelable et durable et pouvant conduire à des structures chimiques plus facilement biodégradables.

Lesdits liants aqueux selon la présente invention sont préparés majoritairement à partir de colophane et de corps gras naturels. Cet avantage est notable puisque, dans certains cas, la proportion de matières premières renouvelables dans le polyester gras polyol servant de base à la résine polyuréthane atteint un taux de 100% sur la composition globale de cette résine polyester gras. Le caractère durable de ladite résine est lié à la disponibilité durable et saisonnière desdites matières premières. Ces mêmes causes permettent aussi de limiter l'impact environnemental via une empreinte carbone réduite et un cycle de vie amélioré. Ces deux paramètres reflètent l'impact des produits fabriqués sur l'environnement et la santé. L'utilisation de ressources dites renouvelables ou biosourcées permet en particulier de diminuer les émissions de gaz à effet de serre tel que le dioxyde de carbone.

Ainsi, la résine spécifique de l'invention, qui rend possible ces dispersions et performances techniques liées, est à base d'un polyester gras (non oxydable ou oxydable comme une alkyde) uréthanisé (avec formation de polyuréthane à base de ce polyester).

Cette résine polyester gras de base, d'origine biosourcée et, en particulier alkyde et plus particulièrement alkyde courte ou moyenne en huile < 60%, utilise un fort taux de matières premières d'origine renouvelable et permet des performances spécifiques, en particulier concernant le développement de dureté avec le temps après l'application. De même, la réduction de jaunissement peut être obtenue. En particulier, la nouvelle résine polyuréthane à base de ce polyester peut être utilisée comme liant dans des compositions aqueuses de revêtements décoratifs ou industriels aqueux capables de durcir à l'air avec ou sans agent siccatif, de préférence sans siccatif.

La combinaison des groupements uréthanes audit polyester spécifique permet des avantages supplémentaires particuliers comme une bonne adhérence sur substrat, une bonne flexibilité, une résistance à l'abrasion, une excellente résistance au blocking et une bonne tenue mécanique en général.

Parmi les avantages de la présente invention par rapport à l'état de l'art antérieur, on peut citer en particulier son aptitude au séchage physique qui peut être obtenu de la même façon avec ou sans ajout de siccatif, tel que les dérivés du cobalt. Plus particulièrement, le produit de l'invention a l'aptitude spécifique à sécher et à durcir très rapidement dès les premières heures d'application comme montré par les résultats et graphique ci-dessous (nouveau polyester uréthanisé ou polyuréthane versus WorleeSol^{®} E 150 W). A noter, en particulier, que le produit atteint plus de 85% de son potentiel de dureté après 1 heure d'application seulement et ceci sans aucun ajout de siccatif.

Un avantage supplémentaire lors du séchage des dispersions des résines, selon la présente invention, est le développement plus rapide et plus intense avec le temps d'une dureté stable et ceci sans besoin d'addition de siccativation de type Co (cobalt) ou autre.

L'invention couvre d'abord une résine polyuréthane linéaire ou branchée spécifique à base d'un polyester gras spécifique, d'origine biosourcée, plus particulièrement à base d'une alkyde biosourcée (polyester oxydable).

Ensuite, l'invention concerne une composition de liant organique à base de ladite résine.

L'invention concerne plus particulièrement une dispersion aqueuse de ladite résine polyuréthane.

Un autre objet de l'invention concerne un procédé de préparation de ladite résine à l'état de dispersion aqueuse.

Un autre objet concerne une composition de revêtement qui comprend ladite résine ou dispersion de résine.

Finalement, l'invention concerne un revêtement de substrat qui résulte de ladite résine ou dispersion de résine.

Ainsi, le premier objet de l'invention concerne une résine polyuréthane linéaire ou branchée à base de polyester gras, en particulier à base d'alkyde, obtenue à partir d'au moins un polyester gras hydroxylé A), avec :
- ledit polyester A) étant le produit de la réaction de a) un composant alcool avec b) un composant acide, lequel composant acide b) comprend b1) au moins un acide gras, ledit acide gras étant choisi parmi b1.1) au moins un monoacide et/ou un polyacide gras oxydable, comportant au moins une insaturation oxydable ou b1.2) au moins un monoacide et/ou un polyacide gras non oxydable ou b1.3) au moins un mélange d'acides gras b1.1) et b1.2) et ledit composant b) comprenant en plus b2) de la colophane et/ou des dérivés de colophane portant au moins une fonction acide carboxylique, ladite colophane et/ou dérivés b2) représentant de 30 à 85%, et de préférence de 35 à 75%, plus préférentiellement de 40 à 75% et encore plus préférentiellement de 45 à 75% en poids, par rapport au poids total de A)
- en option, ledit polyester A) ayant une longueur en huile nulle (0%) ou entre 0 et 60%, de préférence de 0 à 50%, plus préférentiellement de 0 à 40%
- en option, ledit polyester A) ayant un rapport en poids d'acides (monoacides) gras oxydables b1.1) par rapport aux acides gras b1.1) + b1.2) globalement, de 0 ou supérieur à 0 et allant jusqu'à 1 ou globalement de 0 à 1
et avec ladite résine polyuréthane étant le produit de réaction dudit polyester polyol A) avec :
B) au moins un diol comportant une fonction acide, choisie parmi carboxylique, sulfonique, phosphonique ou phosphinique (de préférence carboxylique), sulfonique ou phosphonique et plus préférentiellement carboxylique, ladite fonction acide étant éventuellement neutralisée partiellement ou totalement sous forme de sel par une base « faible » (de pkₐ < 14), de préférence choisie parmi les amines et les phosphines et
C) au moins un polyisocyanate, de fonctionnalité allant de 2 à 3, de préférence diisocyanate, plus préférentiellement cycloaliphatique.

En fait, ladite résine polyuréthane est le produit de réaction de polyaddition d'un composant alcool, comprenant le polyester gras hydroxylé A) et du diol B) avec un composant isocyanate constitué par au moins un polyisocyanate C). Aucune structure réticulée n'est présente dans ladite résine utilisable pour la dispersion aqueuse de résine. Une résine de structure linéaire est obtenue pour un polyester gras A) linéaire et au plus bifonctionnel, avec un polyisocyanate C) choisi parmi les diisocyanates.

Le rapport NCO/OH est inférieur ou égal à 1. Dans le cas où ce rapport est inférieur à 1, ladite résine polyuréthane porte des fonctions résiduelles hydroxy réactives pouvant servir à une réaction de réticulation lors de l'étape séparée, d'application (utilisation finale) pour revêtements réticulables.

Le polyisocyanate C) peut être choisi parmi tous les polyisocyanates aliphatiques, cycloaliphatiques ou aromatiques convenables pour la préparation de polyuréthanes par réaction avec un polyol. Ils peuvent être des diisocyanates ou des triisocyanates ou des dérivés de ces isocyanates comme les oligomères de diisocyanates ou précondensats ou prépolymères porteurs de fonctions isocyanates avec une fonctionnalité allant de 2 à 3. Ces polyisocyanates peuvent être éventuellement sous forme bloquée par un agent bloquant labile dans les conditions de réaction.

Comme exemples de diisocyanates convenables, on peut citer sans limitation les suivants : toluène diisocyanate-2,4 et -2,6 (TDI), isophorone diisocyanate (IPDI), hexaméthylène diisocyanate (HDI), triméthyl hexaméthylène diisocyanate (TMDI), 4,4'-diphényl méthane diisocyanate (MDI), 4,4'-dicyclohéxyl méthane diisocyanate (H12MDI), 3,3'-diméthyl-4,4'-biphényl diisocyanate, 1,4-benzène diisocyanate, 1,5-naphtalène diisocyanate (NDI), cyclohexane-1,4 diisocyanate, dodécane diisocyanate, m-tetraméthylène xylylène diisocyanate, 4,6-xylylène diisocyanate.

Comme exemples de triisocyanates convenables, on peut citer les suivants : triisocyanato toluène, trimère TDI (comme Desmodur R de Bayer), trimère HDI (comme Desmodur^{®} N de Bayer).

De préférence, ledit polyisocyanate est un diisocyanate et en particulier cycloaliphatique comme l'IPDI, cyclohexane-1,4 diisocyanate, 4,4'-dicyclohexyl méthane diisocyanate (H12MDI).

Le diol B) est un diol porteur d'une fonction acide qui peut être sous forme neutralisée (salifiée) en partie ou totalement. La fonction acide préférée est parmi carboxylique, sulfonique, phosphonique et plus particulièrement carboxylique ou sulfonique. Comme exemples préférés convenables, on peut citer : l'acide diméthylol propionique ou l'équivalent en remplaçant l'acide carboxylique par sulfonique ou phosphonique.

Concernant la résine polyester gras polyol A) qui est la base de cette résine polyuréthane, de préférence ce polyester a un indice d'acide inférieur à 10, de préférence inférieur à 6 et un indice hydroxyle (I_{OH}) d'au moins 25, de préférence de 50 à 150 et il a une masse moléculaire moyenne en nombre Mn calculée allant de 250 à 10000 et de préférence de 250 à 6000. La Mn calculée, à défaut d'autre indication valable pour toute l'invention, correspond à la Mn calculée à partir des indices OH et acide et la fonctionnalité moyenne. Les indices d'acide sont mesurés selon la méthode de titration ISO 2114 et les indices d'hydroxyle sont calculés en fonction des quantités de matières introduites (rapport molaire OH/COOH).

Ledit composant acide b) de ladite résine polyester A) peut comprendre en plus dudit acide gras b1), en plus de ladite colophane et/ou en plus desdits dérivés de colophane b2), au moins un composé acide b3) ayant au moins une fonction acide carboxylique, avec éventuellement en plus, une fonction hydroxyle et une fonctionnalité globale (carboxy + éventuellement OH) de 2 à 3, avec b3) étant choisi parmi: b3.1) les polyacides saturés et/ou b3.2) les polyacides éthyléniquement insaturés ou b3.3) les hydroxy-acides.

Ledit composé acide b1) peut être selon un cas plus particulier, un polyacide gras non oxydable b1.2) et de préférence il comprend au moins un dimère en C₃₆ et/ou au moins un trimère en C₅₄ d'acide gras.

Le terme « acide gras » défini selon l'invention signifie un acide carboxylique en C₁₂ à C₅₄.

Le terme « longueur en huile », tel qu'utilisé dans la présente invention, signifie le % en poids par rapport au poids total de la résine polyester gras, du poids de « monoacides gras » ou d'huiles ou de dérivés standolies d'huiles (la standolie est un produit résultant de la réaction à haute température, 250-300°C d'un mélange d'huile et d'acide gras), ce % en poids étant exprimé en poids équivalent de dérivés triglycérides (huiles) qui correspondent aux acides gras b1.1), lesdits acides gras étant « oxydables ». Tout calcul et mention de cette caractéristique dans la présente invention est basé sur cette définition. Le terme « acides gras oxydables » pour b1.1) signifie, selon la présente invention, les acides gras ou dérivés (huiles ou standolies) ayant un indice d'iode supérieur ou égal à 80 mg d'iode par g de produit. Lesdits monoacides gras ou triglycérides (huiles) peuvent être des mélanges d'origine naturelle et peuvent comprendre jusqu'à 30% en poids d'acides gras saturés ou non oxydables b1.2).

La résine polyester gras A) hydroxylé selon la présente invention est en particulier caractérisée par la présence dans le composant acide b) du composant important b2) porteur d'au moins une fonction carboxylique et qui est choisi parmi la colophane et ses dérivés, y compris dérivés maléinisés ou acrylés de colophane pouvant porter de 3 à 4 fonctions carboxyliques.

Selon un mode préféré, la résine polyester A) de l'invention comprend moins de 5%, de préférence moins de 3% en poids, et plus préférentiellement aucun (0% de) composé aromatique tel que de type phtalique (anhydride ou acide phtalique, isophtalique, trimellitique ou encore téréphtalique), en dehors des dérivés de la colophane éventuellement utilisés. Par « dérivés de la colophane », on entend des dérivés naturels tels que l'acide déhydroabiétique.

Les acides gras saturés ou non oxydables b1.2) utilisés n'ont pas d'insaturation éthylénique réactive (c'est-à-dire s'il y a une insaturation, elle n'est pas oxydable) et peuvent aussi dériver de l'hydrogénation des acides gras insaturés b1.1), ayant au moins une insaturation réactive (oxydable et hydrogénée). Plus particulièrement, ledit composant acide b) peut comprendre b1.3) un mélange d'au moins deux parmi lesdits composés acides b1.1) et b1.2).

La résine polyester A) selon un autre cas préféré est à base d'un composant acide comprenant en plus dudit acide gras b1), en plus de b2) ladite colophane et/ou desdits dérivés de colophane, au moins un composé acide b3) ayant au moins une fonction acide carboxylique et une fonctionnalité globale de 2 à 3, fonctionnalité globale incluant la fonction acide et une éventuelle autre fonction possible, telle qu'hydroxyle, ledit composé b3) étant choisi parmi : b3.1) les polyacides saturés ou b3.2) les polyacides éthyléniquement insaturés ou b3.3) les hydroxy-acides.

Comme polyacide saturé b3.1) convenable, on peut choisir parmi l'acide et/ou l'anhydride correspondant à : l'acide succinique, l'acide adipique, l'acide sébacique, l'acide dodécanedioïque, l'acide citrique (fonctionnalité 3), le dimère d'acide gras en C₃₆ (de fonctionnalité 2 à 2,2) ou le trimère d'acide gras en C₅₄ (de fonctionnalité 2,5 à 3). Comme polyacide insaturé b3.2) convenable, on peut choisir parmi l'acide et/ou l'anhydride existant correspondant à : l'acide itaconique de fonctionnalité 2, l'acide maléique ou fumarique de fonctionnalité 2 ou l'acide tétrahydrophtalique (THP) de fonctionnalité 2. Parmi les polyacides préférés, on peut citer les polyacides comprenant au moins un dimère en C₃₆ et/ou trimère en C₅₄ d'acide gras. Comme hydroxy-acides b3.3) préférés, on peut citer l'acide glycolique ou l'acide lactique.

Une combinaison de plusieurs polyacides et monoacides est souvent utilisée afin d'optimiser les propriétés physico-chimiques de la résine polyuréthane qui résulte du polyester A) en particulier de l'alkyde, plus particulièrement pour obtenir le compromis désiré de dureté/souplesse ou flexibilité. L'incorporation dans A) selon l'invention, en particulier dans les alkydes, de dérivés acides aromatiques comme les phtaliques (diacide/anhydride) ou benzoïques (monoacide) est possible mais de préférence avec un taux de moins de 5% en poids, et plus préférentiellement avec moins de 3% en poids. Encore plus préférentiellement, il n'y a aucun dérivé aromatique (0% d'aromatiques) en dehors d'éventuels dérivés naturels de colophane.

La présence d'un composant monoacide tel que les acides abiétiques ou primariques, en particulier de la colophane et/ou de ses dérivés, et plus particulièrement à un taux aussi important, constitue l'élément essentiel de la structure du polyester, en particulier alkyde A) comme définie selon l'invention, pour permettre les propriétés particulières observées. Le taux de colophane dans A) est élevé et varie de 30 à 85%, de préférence de 35 à 75%, plus préférentiellement de 40 à 75% et encore plus préférentiellement de 45 à 75%. Les acides gras utilisés, compte tenu de leur origine naturelle, sont des mélanges comme définis selon b1.3) comprenant des acides gras saturés ou non oxydables b1.1) et acides gras insaturés b1.2) à insaturations non conjuguées et à insaturations conjuguées. Ces acides gras, ainsi que les acides gras dimères et/ou trimères synthétisés à partir de ces mêmes acides gras naturels, apportent la souplesse et la flexibilité nécessaire au liant et au revêtement obtenu qui en résulte.

Selon un mode préféré de l'invention, la résine polyuréthane de l'invention est à base d'un polyester gras A) où ledit acide gras oxydable b1.1) est sélectionné parmi les monoacides gras d'origine végétale ou animale, de préférence en C₁₆ à C₂₄, avec un indice d'iode moyen allant de 100 à 200 mg I₂/g.

Concernant le composant alcool a) de ladite résine polyester gras polyol A), de préférence il peut comprendre au moins un polyol de fonctionnalité allant de 2 à 10 et plus préférentiellement de 2 à 6.

Les polyols a) convenables selon l'invention peuvent être sélectionnés parmi : éthylène glycol, polyéthylène glycol, de préférence de masse moléculaire moyenne en nombre Mn (calculée à partir de l'indice OH) allant de 250 à 3000, propylène glycol (propane diol-1,2), 1,3-propanediol, dipropylène glycol, triéthylène glycol, glycérol, diglycérol, triméthylol propane ou triméthylol éthane, pentaérythritol, dipentaérythritol, sorbitol, mannitol, méthyl glucoside, polyglycérol, en particulier oligomères de glycérol, comme le Polyglycérol-3 (trimère de glycérol) et décaglycérol et de préférence, les oligomères de glycérol et leurs mélanges, tel que le Polyglycérol-3, lequel Polyglycérol-3 est un mélange d'oligomères du glycérol (glycérine oligomérisée avec présence d'oligomères contenant en poids 30 à 55% de trimère de glycérol constituant l'oligomère prédominant) produit commercialisé par Solvay. Le polyol préféré est la glycérine (ou glycérol) et/ou le pentaérythritol.

Plus particulièrement, ledit polyol a) peut être sélectionné parmi : éthylène glycol, polyéthylène glycol de préférence de Mn de 250 à 3000, propylène glycol, 1,3-propanediol, dipropylène glycol, triéthylène glycol, glycérol, diglycérol, triméthylol propane (ou éthane), pentaérythritol, dipentaérythritol, sorbitol, mannitol, méthyl glucoside, polyglycérol, en particulier glycérol.

Selon un mode préféré de l'invention, ladite résine polyuréthane et dispersion aqueuse liée est à base d'une résine polyester gras A), dans laquelle ledit polyacide b1.2) comprend au moins un dimère d'acide gras en C₃₆ et/ou un trimère d'acide gras en C₅₄ et en ce que ledit polyol a) comprend le glycérol ou au moins un oligomère de glycérol et/ou le pentaérythritol et/ou le dipentaérythritol et de préférence le glycérol et/ou le pentaérythritol.

Dans la résine polyuréthane selon la présente invention, ladite fonction acide dudit diol B) peut être sous forme neutralisée (salifiée) par un agent de neutralisation qui est une base faible, de préférence sélectionnée parmi les amines tertiaires, en particulier les trialkyl amines ou phosphines et plus préférentiellement elle est neutralisée (salifiée) par des amines tertiaires. L'agent de neutralisation est une base faible, ce qui signifie une basicité inférieure à celle de la soude ou de la potasse (pKₐ < 14).

Selon un cas particulier, la ladite résine polyuréthane de l'invention porte des groupements réactifs hydroxyles, de préférence avec un indice OH d'au moins 20, plus préférentiellement d'au moins 40. Il s'agit en fait de groupements OH résiduels restant après la réaction entre le composant alcool comprenant le polyester gras polyol et le diol B) et le polyisocyanate C). En général, pour la résine polyuréthane, un excès d'au moins 5% de fonctions OH par rapport aux fonctions isocyanates NCO est utilisé. Dans le cas particulier où des résines polyuréthanes avec un indice OH comme indiqué ci-dessous sont visées, dans ce cas, l'excès des fonctions OH par rapport aux fonctions isocyanates est ajusté en fonction de cet indice. La présence de ces fonctions OH résiduelles permet la modification supplémentaire de la résine de l'invention mais surtout sa réticulation à un stade ultérieur lors de son utilisation dans une application finale de revêtement. La réticulation peut être réalisée avec un agent de réticulation adapté (réactif par rapport aux fonctions hydroxyles et multifonctionnel) comme par exemple la mélamine, les polyisocyanates bloqués ou non bloqués.

Le deuxième objet de l'invention concerne une composition de liant organique qui comprend au moins une résine telle que définie selon l'invention exposée ci-dessus. Cette composition de liant peut comprendre en plus de la résine de l'invention, au moins une deuxième résine différente de la première, cette deuxième résine étant sélectionnée parmi les résines de polyesters à base d'acides gras, de préférence parmi les résines alkydes modifiées. Parmi les alkydes modifiées convenables pour cette composition, on peut citer les alkydes modifiées par structure acrylique, les alkydes modifiées au styrène, modifiées amides, modifiées silicone.

Un autre objet de l'invention concerne une dispersion aqueuse de résine qui comprend au moins une résine polyuréthane ou au moins une composition de liant de l'invention, de préférence avec ladite fonction acide dudit diol B) étant neutralisée partiellement ou totalement par une base faible, de préférence choisie parmi les amines, en particulier amines tertiaires ou phosphine, de préférence amines tertiaires et en particulier trialkyl amines comme la triéthylamine (TEA).

De préférence, ladite dispersion a un extrait sec allant de 20 à 60%, et de préférence de 30 à 50% et une taille moyenne de particules allant de 30 à 200 nm.

Plus particulièrement, elle peut être exempte de tout solvant organique avec un taux correspondant de VOC inférieur à 5 000 ppm, de préférence inférieur à 1 000 ppm et plus préférentiellement inférieur à 500 ppm.

Cette dispersion aqueuse de résine selon l'invention peut comprendre un mélange de dispersions, avec au moins une première dispersion aqueuse de résine selon l'invention et avec au moins une deuxième dispersion de résine différente de la première, cette deuxième dispersion de résine étant sélectionnée parmi les dispersions d'alkydes, éventuellement modifiées, les dispersions (ou émulsions) acryliques (y compris styrène-acrylique) ou les dispersions d'autres polymères et en particulier les dispersions de polyuréthanes, de polyesters saturés ou insaturés. Dans ce cas, le taux en poids de ladite première dispersion peut varier de 50 à 99,5% par rapport audit mélange.

Un cas plus particulier de dispersion aqueuse selon l'invention est celui où ladite dispersion comprend une résine polyuréthane portant des groupements OH avec un indice OH étant d'au moins 20 et plus préférentiellement d'au moins 40. Une telle dispersion peut être utilisée en particulier pour des compositions aqueuses de revêtements réticulables en présence d'un agent réticulant multifonctionnel portant des fonctions réactives avec les groupements OH. Un exemple convenable d'un tel agent réticulant est la mélamine, polyisocyanates bloqués ou non.

L'invention concerne ensuite un procédé de préparation pour ladite résine polyuréthane et plus particulièrement sous forme de dispersion aqueuse. Par définition, cela concerne également un procédé de préparation de ladite dispersion aqueuse.

Ce procédé de préparation d'une résine de l'invention, à l'état de dispersion aqueuse, comprend au moins les étapes successives suivantes :
i) préparation d'un polyester polyol A) (gras) tel que défini ci-haut, par réaction de polycondensation en masse à l'état fondu desdits composants alcool a) et acide b), jusqu'à obtention d'un indice d'acide inférieur à 10,
ii) dissolution et dilution dudit polyester dans un solvant volatile (ayant un point d'ébullition inférieur à 150°C, de préférence inférieur à 100°C),
iii) réaction de polyaddition en milieu solvant dudit polyester A) tel qu'obtenu à l'étape ii) par addition dudit diol B) et dudit polyisocyanate, de préférence diisocyanate C), avec neutralisation partielle ou complète de ladite fonction acide de B) par une base faible choisie parmi les amines ou les phosphines, de préférence les amines, en particulier les amines tertiaires, ladite neutralisation pouvant avoir lieu préalablement ou postérieurement à ladite polyaddition,
iv) en fin de réaction de l'étape iii), dispersion dans l'eau sous agitation, de la solution de polyuréthane, telle qu'obtenue à l'étape iii), avant
v) élimination dudit solvant organique par évaporation ou par entraînement à la vapeur (en particulier strippage par vapeur d'eau) ou avec un gaz inerte.

L'utilisation des résines polyuréthanes et des dispersions aqueuses à base de ces résines de l'invention conviennent en particulier pour des applications dans les revêtements aqueux.

Ainsi, l'invention concerne plus particulièrement une composition de revêtement aqueux qui comprend comme liant au moins une résine ou au moins une composition de liant ou au moins une dispersion aqueuse telle que définie ci-dessus selon l'invention. Ces compositions se distinguent de l'état de l'art en termes de performances applicatives plus particulièrement en ce qui concerne le développement plus rapide de dureté et le séchage physique rapide et avec un développement de jaunissement réduit et contrôlé avec le temps. Les revêtements qui en résultent présentent des performances supplémentaires parmi : résistance à l'abrasion, bonne flexibilité, résistance au blocking, adhérence et tenue mécanique. Compte tenu de l'adhérence particulière des résines polyuréthanes sur substrat métallique et de l'effet barrière caractérisé par la forte hydrophobie/dureté du liant à base de colophane, ce type de liant confère au revêtement final des propriétés anticorrosives particulièrement performantes. C'est une application visée en particulier pour les revêtements aqueux à base de la résine polyuréthane de la présente invention. L'autre avantage de par la composition chimique de la résine est que ce liant est fortement biosourcé.

Selon un cas plus particulier, ladite composition de revêtement de l'invention est réticulable et comprend au moins une dispersion aqueuse de résine polyuréthane selon la présente invention comportant des groupements hydroxyles (résiduels de la réaction avec ledit polyisocyanate), de préférence avec un indice OH d'au moins 20, plus préférentiellement d'au moins 40 et ladite dispersion comprend en plus au moins un agent réticulant pouvant réagir avec lesdites fonctions hydroxyles, de préférence ledit agent réticulant étant sélectionné parmi : mélamine, polyisocyanate bloqué ou non bloqué, époxy et silane.

La composition de revêtement de l'invention est plus particulièrement utilisée pour des revêtements aqueux comme adhésifs, peintures, lasures, primaires et vernis. Selon un mode particulier préféré, ces compositions contiennent un taux réduit de siccatifs et plus préférentiellement elles sont exemptes de siccatifs tels que les sels de métaux lourds comme les sels de cobalt ou d'étain et plus particulièrement elles ne contiennent aucun siccatif.

Enfin, l'invention concerne un revêtement de substrat tel qu'obtenu à partir d'au moins une résine ou d'une composition de liant ou d'une dispersion aqueuse telle que définie ci-haut selon l'invention.

L'invention est illustrée sans limitation de couverture par les exemples présentés ci-dessous.

### PARTIE EXPERIMENTALE

### 1) Préparation d'une résine polyester gras polyol A) et caractéristiques

### Exemple 1

Ledit polyester A) est formé par condensation « one pot » (une étape) à 230-250°C d'un mélange composé de glycérol, de dimère d'acide gras (Pripol^{®} 1017 commercialisé par CRODA) et de colophane dans les proportions massiques suivantes (voir tableau 1) :

**Tableau 1 : composition des réactants**

| Composants | Fournisseur | Parties en poids |
|---|---|---|
| Pripol^{®} 1017 (dimère d'acide gras) avec I_{A} : 195-210 Insaturation oxydable : 0 | CRODA | 540,8 |
| Glycérol | SOLVAY | 197,9 |
| Colophane (Gum Rosin) | TER-HELL & Co GMBH | 759,4 |

La condensation est stoppée de façon à obtenir une viscosité finale de 70 Pa.s (mesurée à 110°C à l'aide d'un viscosimètre CAP 1000) avec un indice d'acide inférieur à 10 mg KOH/g (entre 6 et 8).

Caractéristiques calculées de la résine A) :
- I_{OH} : 90 mg KOH/g (calculé par l'excès OH)
- I_{A} : 6 mg KOH/g (méthode ISO 2114)
- % colophane : 50%
- longueur en huile : 40%
- insaturation oxydable : 0 mg I₂/g
- Mn : calculée à partir des données de I_{A} + I_{OH} et fonctionnalité : 1140 g/mol (pour I_{A} = 6 mg KOH/g, I_{OH} en excès = 90 mg KOH/g et fonctionnalité = 1,58).

### 2) Préparation d'une dispersion aqueuse de résine polvuréthane (et indirectement de la résine polyuréthane)

Le polyester A), tel que décrit à l'exemple 1 ci-dessus, est dilué dans de l'acétone pour y être modifié en polyuréthane en présence d'isophorone diisocyanate (IPDI), d'acide diméthylolpropionique (DMPA) et de triéthylamine (TEA), puis le produit est finalement dispersé dans de l'eau après réaction quasiment complète des fonctions isocyanates. Les proportions sont indiquées dans le tableau 2 et le mode opératoire est détaillé ci-dessous.

**Tableau 2 : Composition de réactants pour la préparation de la résine polyuréthane selon l'invention**

| Matière Première | Fournisseur | Moles | Parties en poids (g) |
|---|---|---|---|
| polyester A) de l'exemple 1 | Selon exemple 1 | / | 352,00 |
| DMPA | PERSTORP | 0,161 | 21,60 |
| Acétone 1 | VWR | / | 197,50 |
| TEA | Aldrich | 0,197 | 20,00 |
| IPDI | RHODIA | 0,339 | 75,40 |
| Acétone 2 | VWR | | 93,00 |
| Eau | | / | 600,00 |

### Mode opératoire détaillé :

Sur le polyester A) fondu décrit à l'exemple 1, entre 50 et 60°C, sont introduits sous agitation mécanique, l'acétone (portion 1 : soit 197,5 g), puis le DMPA et la TEA. Le milieu est ensuite maintenu à reflux pendant 45 minutes aux alentours de 54°C, puis l'IPDI est introduit rapidement en une fois. La réaction d'uréthanisation (formation de polyuréthane) est suivie par IRTF (Infra Rouge à transformée de Fourrier) jusqu'à obtenir une conversion des fonctions isocyanates (NCO) de l'ordre de 94% environ. L'acétone (portion 2 : 93 g) est ensuite ajoutée au milieu puis l'eau est introduite en 10 min entre 35°C et 40°C. L'acétone (et une partie de l'eau) est ensuite évaporée à pression atmosphérique à 55-60°C et sous barbotage d'azote jusqu'à obtenir un extrait sec final de 40% en poids environ. La dispersion de résine polyuréthane (PUD) est ensuite filtrée sur une toile de 25 microns.

Les caractéristiques de la dispersion finale sont données au tableau 3 ci-dessous.

**Tableau 3 : Caractéristiques de la dispersion finale**

| Caractéristique | Valeur |
|---|---|
| IOH (mg KOH/g) | 26 |
| pH | 8-9 |
| Taille Malvern particules (nm) | 70 |
| Viscosité Brookfield DVII+ à 25°C/100 rpm (mPa.s) | 150 |

### 3) Résultats de performances sur revêtements

### Développement de dureté dans le temps

L'évaluation de dureté est réalisée sur des films obtenus par application sur plaque de verre d'une couche de dispersion aqueuse de résine de l'exemple 2 d'une épaisseur humide de 100 µm.

Le test de dureté est selon la méthode ISO 1522. Il s'agit d'une dureté pendulaire (Persoz) réalisée à 23°C et à 50% d'humidité relative. Les vernis sont appliqués à 100 µm d'épaisseur humide, puis séchés sur une surface parfaitement horizontale à 23°C et sous une humidité relative de 50% pendant 24 heures avant la première mesure.

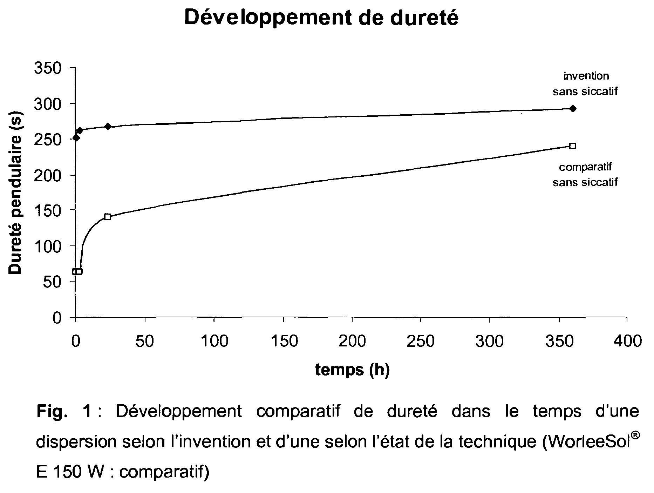

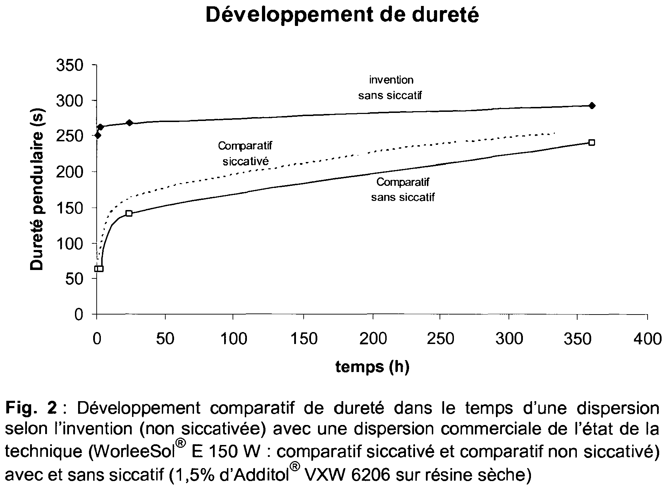

Les résultats obtenus sont présentés sous forme de graphiques comparés sur les figures 1 et 2 où les performances de la dispersion selon l'invention de l'exemple 2 sont comparées à celles d'une dispersion commerciale WorleeSol^{®} E 150 W commercialisé par Worlee représentant l'état de la technique (siccativée et non siccativée).

La figure 1 présente le séchage strictement comparatif, obtenu dans les mêmes conditions de test, sans ajout de siccatif (tel que dérivés du cobalt). La caractéristique essentielle du produit de l'invention, qui ressort de cette comparaison, est son aptitude à sécher physiquement et à durcir très rapidement dès les premières heures d'application. Selon le graphique de la figure 1, la dispersion de résine selon l'exemple 2 de l'invention comparée à WorleeSol^{®} E 150 W sèche et durcit beaucoup plus rapidement et surtout plus intensément que le produit de référence représentant l'état de la technique. Le produit selon l'invention atteint plus de 85% de son potentiel de dureté seulement après 1 heure d'application et ce sans ajout de siccatif.

La figure 2 montre de façon spectaculaire que la dispersion de résine selon l'invention de l'exemple 2, même en étant non siccativée, reste à nouveau supérieure à la dispersion de résine commerciale de référence siccativée par du cobalt (Additol^{®} VXW 6206 commercialisé par Cytec, ajouté à 1,5% en poids sur résine sèche).

Les autres avantages sont : le plus faible niveau de jaunissement avec même niveau de performance avec ou sans ajout de siccatif.

## Revendications

1. Résine polyuréthane linéaire ou branchée à base de polyester gras, en particulier à base d'alkyde, **caractérisée en ce qu'**elle est obtenue à partir de A) : au moins un polyester gras hydroxylé, avec :
- ledit polyester A) étant le produit de réaction de a) un composant alcool avec b) un composant acide, lequel composant acide b) comprend b1) au moins un acide gras, ledit acide gras étant choisi parmi b1.1) au moins un monoacide et/ou polyacide gras oxydable, comportant au moins une insaturation oxydable ou b1.2) au moins un monoacide et/ou polyacide gras non oxydable ou b1.3) au moins un mélange d'acides gras b1.1) et b1.2) et ledit composant b) comprenant en plus b2) de la colophane et/ou des dérivés de colophane portant au moins une fonction acide carboxylique, ladite colophane et/ou dérivés b2) représentant de 30 à 85%, et de préférence de 35 à 75%, plus préférentiellement de 40 à 75% et encore plus préférentiellement de 45 à 75% en poids, par rapport au poids total de A)
- en option, ledit polyester A) ayant une longueur en huile nulle (0%) ou entre 0 et 60%, de préférence de 0 à 50%, plus préférentiellement de 0 à 40%
- en option, ledit polyester A) ayant un rapport en poids d'acides (monoacides) gras oxydables b1.1) par rapport aux acides gras b1.1) + b1.2) globalement, de 0 ou supérieur à 0 et allant jusqu'à 1,
et avec ladite résine, étant le produit de réaction dudit polyester polyol A) avec :
B) au moins un diol comportant une fonction acide choisie parmi carboxylique, sulfonique, phosphonique ou phosphinique, de préférence carboxylique, sulfonique ou phosphonique et plus préférentiellement carboxylique, ladite fonction acide étant éventuellement neutralisée partiellement ou totalement sous forme de sel par une base faible, de préférence choisie parmi les amines et les phosphines
et
C) au moins un polyisocyanate, de fonctionnalité allant de 2 à 3, de préférence diisocyanate, plus préférentiellement cycloaliphatique.

2. Résine selon la revendication 1, **caractérisée en ce que** ledit composant acide b) comprend en plus dudit acide gras b1), en plus de ladite colophane et/ou en plus desdits dérivés de colophane b2), au moins un composé acide avec b3) ayant au moins une fonction acide carboxylique, avec éventuellement en plus, une fonction hydroxyle et une fonctionnalité globale de 2 à 3, avec b3) étant choisi parmi b3.1) les polyacides saturés et/ou b3.2) les polyacides éthyléniquement insaturés ou b3.3) les hydroxy-acides.

3. Résine selon la revendication 1 ou 2, **caractérisée en ce que** ledit composé acide b1) est un polyacide gras non oxydable b1.2) et de préférence il comprend au moins un dimère en C₃₆ et/ou au moins un trimère en C₅₄ d'acide gras.

4. Résine selon l'une des revendications 1 à 3, **caractérisée en ce que** ledit composant alcool a) comprend au moins un polyol de fonctionnalité allant de 2 à 10 et de préférence de 2 à 6.

5. Résine selon l'une des revendications 1 à 4, **caractérisée en ce que** ledit polyester A) a un indice d'acide inférieur à 10, un indice OH supérieur à 25, de préférence allant de 50 à 150 et une masse moléculaire moyenne en nombre Mn calculée, allant de 250 à 10000 et de préférence de 250 à 6000 (g/mol).

6. Résine selon l'une des revendications 1 à 5, **caractérisée en ce que** ledit acide gras oxydable b1.1) est sélectionné parmi les monoacides gras d'origine végétale ou animale, de préférence en C₁₆ à C₂₄, avec un indice d'iode moyen allant de 100 à 200 mg I₂/g.

7. Résine selon l'une des revendications 1 à 6, **caractérisée en ce que** ledit polyacide b1.2) comprend au moins un dimère d'acide gras en C₃₆ et/ou un trimère d'acide gras en C₅₄ et **en ce que** ledit polyol a) comprend le glycérol ou au moins un oligomère de glycérol et/ou le pentaérythritol et/ou le dipentaérythritol et de préférence le glycérol et/ou le pentaérythritol.

8. Résine telle que définie selon l'une des revendications 1 à 7, **caractérisée en ce que** ladite fonction acide dudit diol B) est sous forme neutralisée (salifiée) par une base faible sélectionnée parmi les amines tertiaires, en particulier les trialkyl amines ou phosphines et plus préférentiellement les amines tertiaires.

9. Résine selon l'une des revendications 1 à 8, **caractérisée en ce qu'**elle comporte des groupements réactifs hydroxyles, de préférence avec un indice OH de ladite résine polyuréthane d'au moins 10 plus préférentiellement d'au moins 20.

10. Composition de liant organique, **caractérisée en ce qu'**elle comprend au moins une résine telle que définie selon l'une des revendications 1 à 9.

11. Composition selon la revendication 10, **caractérisée en ce qu'**en plus de la résine telle que définie selon l'une des revendications 1 à 9, elle comprend au moins une deuxième résine différente de la première, cette deuxième résine étant sélectionnée parmi les résines de polyesters à base d'acides gras, de préférence parmi les résines alkydes modifiées.

12. Dispersion aqueuse de résine, **caractérisée en ce qu'**elle comprend au moins une résine telle que définie selon l'une des revendications 1 à 9 ou au moins une composition de liant telle que définie selon la revendication 10 ou 11, de préférence avec ladite fonction acide dudit diol B) étant neutralisée partiellement ou totalement par une base faible, de préférence choisie parmi les amines, en particulier amines tertiaires ou phosphine, de préférence amines tertiaires et en particulier trialkyl amines.

13. Dispersion selon la revendication 12, **caractérisée en ce qu'**elle a un extrait sec allant de 20 à 60% et de préférence de 30 à 50% et une taille moyenne de particules allant de 30 à 200 nm.

14. Dispersion selon la revendication 12 ou 13, **caractérisée en ce qu'**elle est exempte de tout solvant organique avec un taux correspondant de VOC inférieur à 5 000 ppm, de préférence inférieur à 1 000 ppm et plus préférentiellement inférieur à 500 ppm.

15. Dispersion aqueuse de résine, **caractérisée en ce qu'**elle comprend un mélange d'au moins une première dispersion aqueuse de résine telle que définie selon l'une des revendications 12 à 14 avec au moins une deuxième dispersion de résine différente de la première, cette deuxième dispersion de résine étant sélectionnée parmi les dispersions d'alkydes, éventuellement modifiées, les dispersions (ou émulsions) acryliques (y compris styrène-acrylique) ou les dispersions d'autres polymères et en particulier les dispersions de polyuréthanes, de polyesters saturés ou insaturés.

16. Procédé de préparation d'une résine telle que définie selon l'une des revendications 1 à 9 à l'état de dispersion aqueuse, **caractérisé en ce qu'**il comprend les étapes successives suivantes :
i) préparation d'un polyester polyol A) tel que défini dans l'une des revendications 1 à 9, par réaction de polycondensation en masse à l'état fondu desdits composants alcool a) et acide b), jusqu'à obtention d'un indice d'acide inférieur à 10
ii) dissolution et dilution dudit polyester dans un solvant volatile ayant un point d'ébullition inférieur à 150°C, de préférence inférieur à 100°C
iii) réaction de polyaddition en milieu solvant dudit polyester A) tel qu'obtenu à l'étape ii) par addition dudit diol B) et dudit polyisocyanate, de préférence diisocyanate C), avec neutralisation partielle ou complète de ladite fonction acide de B) par une base faible choisie parmi les amines ou phosphines, de préférence amines, en particulier amines tertiaires, ladite neutralisation pouvant avoir lieu préalablement ou postérieurement à ladite polyaddition,
iv) en fin de réaction de l'étape iii), dispersion dans l'eau sous agitation, de la solution de polyuréthane, telle qu'obtenue à l'étape iii), avant
v) élimination dudit solvant organique par évaporation ou par entraînement à la vapeur ou avec un gaz inerte.

17. Composition de revêtement aqueux, **caractérisée en ce qu'**elle comprend comme liant au moins une résine telle que définie selon l'une des revendications 1 à 9 ou au moins une composition de liant telle que définie selon la revendication 10 ou 11 ou au moins une dispersion aqueuse telle que définie selon l'une des revendications 12 à 15.

18. Composition de revêtement selon la revendication 17, **caractérisée en ce qu'**elle est réticulable et qu'elle comprend au moins une dispersion de résine polyuréthane telle que définie selon la revendication 9 et au moins un agent réticulant pouvant réagir avec les fonctions hydroxyles, de préférence sélectionné parmi : mélamine, polyisocyanate bloqué ou non bloqué, époxy et silane.

19. Composition de revêtement selon la revendication 17 ou 18, **caractérisée en ce que** ledit revêtement est sélectionné parmi les revêtements aqueux : adhésifs, peintures, lasures, primaires et vernis.

20. Composition de revêtement selon l'une des revendications 17 à 19, **caractérisée en ce qu'**il s'agit de revêtements anticorrosion.

21. Revêtement de substrat, **caractérisé en ce qu'**il est obtenu à partir d'au moins une résine telle que définie selon l'une des revendications 1 à 9 ou d'une composition de liant telle que définie selon la revendication 10 ou 11 ou d'au moins une dispersion aqueuse telle que définie selon l'une des revendications 12 à 15.

## Patentansprüche

1. Lineares oder verzweigtes Polyurethanharz auf Basis von Fettpolyester, insbesondere auf Basis von Alkydharz, **dadurch gekennzeichnet, dass** es erhalten wird aus A): mindestens einem hydroxylierten Fettpolyester, wobei
- es sich bei dem Polyester A) um das Umsetzungsprodukt von a) einer Alkoholkomponente mit b) einer Säurekomponente handelt, wobei die Säurekomponente b) b1) mindestens eine Fettsäure umfasst, wobei die Fettsäure aus b1.1) mindestens einer oxidierbaren Monofettsäure und/oder Polyfettsäure mit mindestens einer oxidierbaren Ungesättigtheit oder b1.2) mindestens einer nicht oxidierbaren Monofettsäure und/oder Polyfettsäure oder b1.3) mindestens einer Mischung von Fettsäuren b1.1) und b1.2) ausgewählt ist, und wobei die Komponente b) außerdem b2) Kolophonium und/oder Kolophoniumderivate mit mindestens einer Carbonsäurefunktion umfasst, wobei das Kolophonium und/oder die Derivate b2) 30 bis 85 Gew.-%, vorzugsweise 35 bis 75 Gew.-%, weiter bevorzugt 40 bis 75 Gew.-% und noch weiter bevorzugt 45 bis 75 Gew.-%, bezogen auf das Gesamtgewicht von A), ausmachen,
- der Polyester A) gegebenenfalls eine Öllänge von null (0%) oder zwischen 0 und 60%, vorzugsweise 0 bis 50%, weiter bevorzugt 0 bis 40%, aufweist,
- der Polyester A) gegebenenfalls ein Gewichtsverhältnis von oxidierbaren Fettsäuren (Monofettsäuren) b1.1) zu Fettsäuren b1.1) + b1.2) insgesamt von 0 oder mehr als 0 und bis zu 1 aufweist,
und wobei es sich bei dem Harz um das Umsetzungsprodukt des Polyesterpolyols A) mit:
B) mindestens einem Diol mit einer Säurefunktion, die aus einer Carbonsäure-, Sulfonsäure-, Phosphonsäure- oder Phosphinsäurefunktion, vorzugsweise Carbonsäure-, Sulfonsäure- oder Phosphonsäurefunktion und weiter bevorzugt einer Carbonsäurefunktion ausgewählt ist, wobei die Säurefunktion gegebenenfalls teilweise oder vollständig durch eine schwache Base, die vorzugsweise aus Aminen und Phosphinen ausgewählt ist, zur Salzform neutralisiert ist, und
C) mindestens einem Polyisocyanat mit einer Funktionalität im Bereich von 2 bis 3, vorzugsweise einem Diisocyanat, weiter bevorzugt einem cycloaliphatischen Diisocyanat,
handelt.

2. Harz nach Anspruch 1, **dadurch gekennzeichnet, dass** die Säurekomponente b) außer der Fettsäure b1) und außer dem Kolophonium und/oder außer den Kolophoniumderivaten b2) mindestens eine Säureverbindung b3) mit mindestens einer Carbonsäurefunktion und gegebenenfalls außerdem einer Hydroxylfunktion und einer Gesamtfunktionalität von 2 bis 3 umfasst, wobei b3) aus b3.1) gesättigten Polysäuren und/oder b3.2) ethylenisch ungesättigten Polysäuren oder b3.3) Hydroxysäuren ausgewählt ist.

3. Harz nach Anspruch 1 oder 2, **dadurch gekennzeichnet, dass** die Säureverbindung b1) eine nicht oxidierbare Polyfettsäure b1.2) ist und vorzugsweise mindestens ein C₃₆-Fettsäuredimer und/oder mindestens ein C₅₄-Fettsäuretrimer umfasst.

4. Harz nach einem der Ansprüche 1 bis 3, **dadurch gekennzeichnet, dass** die Alkoholkomponente a) mindestens ein Polyol mit einer Funktionalität im Bereich von 2 bis 10 und vorzugsweise 2 bis 6 umfasst.

5. Harz nach einem der Ansprüche 1 bis 4, **dadurch gekennzeichnet, dass** der Polyester A) eine Säurezahl von weniger als 10, eine OH-Zahl von mehr als 25, vorzugsweise im Bereich von 50 bis 150, und ein berechnetes zahlenmittleres Molekulargewicht Mn im Bereich von 250 bis 10.000 und vorzugsweise 250 bis 6000 (g/mol) aufweist.

6. Harz nach einem der Ansprüche 1 bis 5, **dadurch gekennzeichnet, dass** die oxidierbare Fettsäure b1.1) aus Monofettsäuren pflanzlicher oder tierischer Herkunft, vorzugsweise C₁₆- bis C₂₄-Monofettsäuren, mit einer mittleren Iodzahl im Bereich von 100 bis 200 mg I₂/g ausgewählt ist.

7. Harz nach einem der Ansprüche 1 bis 6, **dadurch gekennzeichnet, dass** die Polysäure b1.2) mindestens ein C₃₆-Fet tsäuredimer und/oder ein C₅₄-Fettsäuretrimer umfasst und dass das Polyol a) Glycerin oder mindestens ein Oligomer von Glycerin und/oder Pentaerythrit und/oder Dipentaerythrit und vorzugsweise Glycerin und/oder Pentaerythrit umfasst.

8. Harz gemäß einem der Ansprüche 1 bis 7, **dadurch gekennzeichnet, dass** die Säurefunktion des Diols B) in durch eine schwache Base, die aus tertiären Aminen, insbesondere Trialkylaminen, oder Phosphinen und weiter bevorzugt tertiären Aminen ausgewählt ist, neutralisierter (versalzter) Form vorliegt.

9. Harz nach einem der Ansprüche 1 bis 8, **dadurch gekennzeichnet, dass** es reaktive Hydroxylgruppen enthält, vorzugsweise mit einer OH-Zahl des Polyurethanharzes von mindestens 10, weiter bevorzugt mindestens 20.

10. Organische Bindemittelzusammensetzung, **dadurch gekennzeichnet, dass** sie mindestens ein Harz gemäß einem der Ansprüche 1 bis 9 umfasst.

11. Zusammensetzung nach Anspruch 10, **dadurch gekennzeichnet, dass** sie außer dem Harz gemäß einem der Ansprüche 1 bis 9 mindestens ein zweites Harz, das von dem ersten Harz verschieden ist, umfasst, wobei dieses zweite Harz aus Polyesterharzen auf Basis von Fettsäuren, vorzugsweise aus modifizierten Alkydharzen, ausgewählt ist.

12. Wässrige Harzdispersion, **dadurch gekennzeichnet, dass** sie mindestens ein Harz gemäß einem der Ansprüche 1 bis 9 oder mindestens eine Bindemittelzusammensetzung gemäß Anspruch 10 oder 11 umfasst, wobei vorzugsweise die Säurefunktion des Diols B) teilweise oder vollständig durch eine schwache Base, die vorzugsweise aus Aminen, insbesondere tertiären Aminen, oder Phosphinen, vorzugsweise tertiären Aminen und insbesondere Trialkylaminen, ausgewählt ist, neutralisiert ist.

13. Dispersion nach Anspruch 12, **dadurch gekennzeichnet, dass** sie einen Feststoffgehalt im Bereich von 20 bis 60% und vorzugsweise 30 bis 50% und eine mittlere Teilchengröße im Bereich von 30 bis 200 nm aufweist.

14. Dispersion nach Anspruch 12 oder 13, **dadurch gekennzeichnet, dass** sie frei von organischem Lösungsmittel ist und einen entsprechenden VC-Gehalt von weniger als 5000 ppm, vorzugsweise weniger als 1000 ppm und weiter bevorzugt weniger als 500 ppm aufweist.

15. Wässrige Harzdispersion, **dadurch gekennzeichnet, dass** sie eine Mischung von mindestens einer ersten wässrigen Harzdispersion gemäß einem der Ansprüche 12 bis 14 mit mindestens einer zweiten Harzdispersion, die von der ersten Harzdispersion verschieden ist, umfasst, wobei diese zweite Harzdispersion aus Dispersionen von gegebenenfalls modifizierten Alkydharzen, Acryldispersionen (oder -emulsionen) (einschließlich Styrol-AcrylDispersionen) oder Dispersionen anderer Polymere und insbesondere Dispersionen von Polyurethanen und gesättigten oder ungesättigten Polyestern ausgewählt ist.

16. Verfahren zur Herstellung eines Harzes gemäß einem der Ansprüche 1 bis 9 in Form einer wässrigen Dispersion, **dadurch gekennzeichnet, dass** es die folgenden aufeinanderfolgenden Schritte umfasst:
i) Herstellen eines Polyesterpolyols A) gemäß einem der Ansprüche 1 bis 9 durch Schmelzepolykondensationsreaktion in Substanz der Alkoholkomponente a) und der Säurekomponente b) bis zum Erhalt einer Säurezahl von weniger als 10,
ii) Lösen und Verdünnen des Polyesters in einem flüchtigen Lösungsmittel mit einem Siedepunkt von weniger als 150°C, vorzugsweise weniger als 100°C,
iii) Polyadditionsreaktion des in Schritt ii) erhaltenen Polyesters A) in Lösungsmittelmedium durch Zugabe des Diols B) und des Polyisocyanats, vorzugsweise Diisocyanats, C) mit teilweiser oder vollständiger Neutralisation der Säurefunktion von B) durch eine schwache Base, die aus Aminen oder Phosphinen, vorzugsweise Aminen, insbesondere tertiären Aminen, ausgewählt wird, wobei die Neutralisation vor oder nach der Polyaddition stattfinden kann,
iv) am Ende der Reaktion von Schritt iii), Dispergieren der wie in Schritt iii) erhaltenen Polyurethanlösung in Wasser unter Rühren und dann
v) Entfernen des organischen Lösungsmittels durch Verdampfen oder durch Schleppen mit Dampf oder mit einem Inertgas.

17. Wässrige Beschichtungszusammensetzung, **dadurch gekennzeichnet, dass** sie als Bindemittel mindestens ein Harz gemäß einem der Ansprüche 1 bis 9 oder mindestens eine Bindemittelzusammensetzung gemäß Anspruch 10 oder 11 oder mindestens eine wässrige Dispersion gemäß einem der Ansprüche 12 bis 15 umfasst.

18. Beschichtungszusammensetzung nach Anspruch 17, **dadurch gekennzeichnet, dass** sie vernetzbar ist und mindestens eine Polyurethanharzdispersion gemäß Anspruch 9 und mindestens ein gegenüber Hydroxylfunktionen reaktionsfähiges Vernetzungsmittel, das vorzugsweise aus Melamin, blockiertem oder unblockiertem Polyisocyanat, Epoxid und Silan ausgewählt ist, umfasst.

19. Beschichtungszusammensetzung nach Anspruch 17 oder 18, **dadurch gekennzeichnet, dass** die Beschichtung ausgewählt ist aus wässrigen Beschichtungen: Klebstoffen, Lacken, Lasuren, Grundierungen und Klarlacken.

20. Beschichtungszusammensetzung nach einem der Ansprüche 17 bis 19, **dadurch gekennzeichnet, dass** es sich um Korrosionsschutzbeschichtungen handelt.

21. Substratbeschichtung, **dadurch gekennzeichnet, dass** sie aus mindestens einem Harz gemäß einem der Ansprüche 1 bis 9 oder einer Bindemittelzusammensetzung gemäß Anspruch 10 oder 11 oder mindestens einer wässrigen Dispersion gemäß einem der Ansprüche 12 bis 15 erhalten wird.

## Claims

1. Linear or branched polyurethane resin based on fatty polyester, in particular based on alkyd resin, **characterized in that** it is obtained from at least one hydroxylated fatty polyester A), with:
- said polyester A) being the product of reaction of a) an alcohol component with b) an acid component, which acid component b) comprises b1) at least one fatty acid, said fatty acid being chosen from b1.1) at least one oxidizable fatty monoacid and/or polyacid, comprising at least one oxidizable unsaturation or b1.2) at least one non-oxidizable fatty monoacid and/or polyacid or b1.3) at least one mixture of fatty acids b1.1) and b1.2) and said component b) also comprising b2) rosin and/or rosin derivatives bearing at least one carboxylic acid function, said rosin and/or derivatives b2) representing from 30% to 85%, preferably from 35% to 75%, more preferentially from 40% to 75% and even more preferentially from 45% to 75% by weight relative to the total weight of A)
- optionally, said polyester A) having a zero oil length (0%) or an oil length of between 0 and 60%, preferably from 0 to 50% and more preferentially from 0 to 40%
- optionally, said polyester A) having a weight ratio of oxidizable fatty acids (monoacids) b1.1) relative to the overall fatty acids b1.1) + b1.2) of 0 or greater than 0 and ranging up to 1
and with said resin being the product of reaction of said polyol polyester A) with:
B) at least one diol comprising an acid function, chosen from carboxylic, sulfonic, phosphonic or phosphinic (preferably carboxylic), sulfonic or phosphonic and more preferentially carboxylic, said acid function optionally being partially or totally neutralized in salt form with a weak base, preferably chosen from amines and phosphines and
C) at least one polyisocyanate, of functionality ranging from 2 to 3, preferably diisocyanate, more preferentially cycloaliphatic.

2. Resin according to Claim 1, **characterized in that** said acid component b) comprises, in addition to said fatty acid b1), in addition to said rosin and/or in addition to said rosin derivatives b2), at least one acid compound with b3) having at least one carboxylic acid function, optionally with, in addition, a hydroxyl function and an overall functionality of 2 to 3, with b3) being chosen from b3.1) saturated polyacids and/or b3.2) ethylenically unsaturated polyacids or b3.3) hydroxy acids.

3. Resin according to Claim 1 or 2, **characterized in that** said acid compound b1) is a non-oxidizable fatty polyacid b1.2) and it preferably comprises at least one C₃₆ fatty acid dimer and/or at least one C₅₄ fatty acid trimer.

4. Resin according to one of Claims 1 to 3, **characterized in that** said alcohol component a) comprises at least one polyol of functionality ranging from 2 to 10 and preferably from 2 to 6.

5. Resin according to one of Claims 1 to 4, **characterized in that** said polyester A) has an acid number of less than 10, an OH number of greater than 25, preferably ranging from 50 to 150, and a calculated number-average molecular mass Mn ranging from 250 to 10 000 and preferably from 250 to 6000 (g/mol).

6. Resin according to one of Claims 1 to 5, **characterized in that** said oxidizable fatty acid b1.1) is selected from fatty monoacids of plant or animal origin, preferably of C₁₆ to C₂₄, with a mean iodine number ranging from 100 to 200 mg I₂/g.

7. Resin according to one of Claims 1 to 6, **characterized in that** said polyacid b1.2) comprises at least one C₃₆ fatty acid dimer and/or a C₅₄ fatty acid trimer and **in that** said polyol a) comprises glycerol or at least one glycerol oligomer and/or pentaerythritol and/or dipentaerythritol and preferably glycerol and/or pentaerythritol.

8. Resin as defined according to one of Claims 1 to 7, **characterized in that** said acid function of said diol B) is in a form neutralized (salified) with a weak base selected from tertiary amines, in particular trialkylamines or phosphines and more preferentially tertiary amines.

9. Resin according to one of Claims 1 to 8, **characterized in that** it comprises hydroxyl reactive groups, preferably with an OH number of said polyurethane resin of at least 10 and more preferentially of at least 20.

10. Organic binder composition, **characterized in that** it comprises at least one resin as defined according to one of Claims 1 to 9.

11. Composition according to Claim 10, **characterized in that**, in addition to the resin as defined according to one of Claims 1 to 9, it comprises at least a second resin different from the first, this second resin being selected from resins of polyesters based on fatty acids, preferably from modified alkyd resins.

12. Aqueous resin dispersion, **characterized in that** it comprises at least one resin as defined according to one of Claims 1 to 9 or at least one binder composition as defined according to Claim 10 or 11, preferably with said acid function of said diol B) being partially or totally neutralized with a weak base, preferably chosen from amines, in particular tertiary amines or phosphine, preferably tertiary amines and in particular trialkylamines.

13. Dispersion according to Claim 12, **characterized in that** it has a solids content ranging from 20% to 60% and preferably from 30% to 50% and a mean particle size ranging from 30 to 200 nm.

14. Dispersion according to Claim 12 or 13, **characterized in that** it is free of any organic solvent with a corresponding VOC content of less than 5000 ppm, preferably less than 1000 ppm and more preferentially less than 500 ppm.

15. Aqueous resin dispersion, **characterized in that** it comprises a mixture of at least a first aqueous resin dispersion as defined according to one of Claims 12 to 14 with at least a second resin dispersion different from the first, this second resin dispersion being selected from optionally modified alkyd resin dispersions, acrylic dispersions (or emulsions) (including styrene-acrylic) or dispersions of other polymers and in particular polyurethane or saturated or unsaturated polyester dispersions.

16. Process for preparing a resin as defined according to one of Claims 1 to 9 in the form of an aqueous dispersion, **characterized in that** it comprises the following successive steps:
i) preparing a polyol polyester A) as defined in one of Claims 1 to 9, by bulk polycondensation reaction in the melt of said alcohol a) and acid b) components, until an acid number of less than 10 is obtained,
ii) dissolution and dilution of said polyester in a volatile solvent with a boiling point of less than 150°C, preferably less than 100°C,
iii) polyaddition reaction in solvent medium of said polyester A) as obtained in step ii) by addition of said diol B) and of said polyisocyanate, preferably diisocyanate C), with partial or total neutralization of said acid function of B) with a weak base chosen from amines or phosphines, preferably amines, in particular tertiary amines, said neutralization possibly taking place prior to or subsequent to said polyaddition,
iv) at the end of the reaction of step iii), dispersion in water with stirring of the polyurethane solution as obtained in step iii), before
v) removal of said organic solvent by evaporation or by entrainment with steam or with an inert gas.

17. Aqueous coating composition, **characterized in that** it comprises as binder at least one resin as defined according to one of Claims 1 to 9 or at least one binder composition as defined according to Claim 10 or 11 or at least one aqueous dispersion as defined according to one of Claims 12 to 15.

18. Coating composition according to Claim 17, **characterized in that** it is crosslinkable and that it comprises at least one polyurethane resin dispersion as defined according to Claim 9 and at least one crosslinking agent that can react with hydroxyl functions, preferably selected from: melamine, blocked or unblocked polyisocyanate, epoxy and silane.

19. Coating composition according to Claim 17 or 18, **characterized in that** said coating is selected from aqueous coatings: adhesives, paints, surface coatings, primers and varnishes.

20. Coating composition according to one of Claims 17 to 19, **characterized in that** it is an anticorrosion coating.

21. A substrate coating, **characterized in that** it is obtained from at least one resin as defined according to one of Claims 1 to 9 or from a binder composition as defined according to Claim 10 or 11 or at least one aqueous dispersion as defined according to one of Claims 12 to 15.
